Europäisches Patentamt

European Patent Office

Office européen des brevets

(19)

(11) EP 1 498 317 A1

(12) EUROPEAN PATENT APPLICATION

(43) Date of publication:
19.01.2005 Bulletin 2005/03

(51) Int Cl.⁷: **B60R 11/02**, H04R 1/02, B60J 5/04

(21) Application number: 04016695.1

(22) Date of filing: 15.07.2004

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: 18.07.2003 JP 2003199103

(71) Applicants:
• **Pioneer Corporation**
  **Meguro-ku, Tokyo (JP)**

• **Tohoku Pioneer Corporation**
  **Tendo-shi, Yamagata-ken (JP)**

(72) Inventor: **Maekawa, Koji**
  **Oaza-Kunomoto Tendo-shi Yamagata-ken (JP)**

(74) Representative:
**Reinhard - Skuhra - Weise & Partner GbR**
**Postfach 44 01 51**
**80750 München (DE)**

(54) **Door loudspeaker apparatus and door panel**

(57) In the vehicle speaker apparatus (SP), a vehicle inner panel (12) having a speaker unit (2) attached thereto is arranged in a door panel (3) having an outer panel (11) and an inner trim (13). The attaching position of the speaker unit (2) is adjusted so as to cause the sound pressure applied by the sound issued from the speaker unit (2) upon propagation through a first acoustic space (21) between the outer panel (11) and the vehicle inner panel (12) to the vehicle inner panel (12) and the sound pressure applied upon propagation through a second acoustic space (22) between the vehicle inner panel (12) and the inner trim (13) to the vehicle inner panel (12) to mutually cancel, and so as to inhibit vibration within a frequency range from among vibrations of the vehicle inner panel (12).

FIG.1

**Description**

BACKGROUND OF THE INVENTION

Field of the Invention

The present invention relates to a door speaker apparatus and a door panel.

Description of the Related Art

A conventional door panel for vehicle had a configuration in which a door inner panel (hereinafter referred to appropriately as an "inner panel") having a speaker unit attached thereto was arranged between a door outer panel (hereinafter referred to appropriately as an "outer panel") and a door panel (or an inner trim") (for example, see U.S. Patent No. 5,924,872).

In a conventional door speaker apparatus, it was the usual practice to cover the back of a speaker unit with a rear cover for speaker (sometimes referred to simply as a cover) , and provide a wall extending so as to bring closely in contact with the peripheral portion of the trim opening to prevent sound leakage to a space formed by the inner panel and the outer panel (for example, see Japanese Unexamined Utility Model Application Publication No. 6-3746) .

Some other conventional door speaker apparatuses for vehicle have provided excellent sound effects by providing a cylinder on the front and on the back of the speaker, thereby causing mutual interference and mutual cancellation of sound effects produced in the cylinder (for example, see Japanese Unexamined Utility Model Application Publication No. 7-42291).

In the above-mentioned prior art, however, it is possible to prevent vibration transmitted directly to the inner panel from the vibration emitted by the speaker unit, but not the vibration of the inner panel caused by the sound pressure of the sound propagating through the space in the outer panel from the back of the speaker unit. As a result, the sound caused by the vibration of the inner panel would cause a listener (a driver or a passenger) to also hear sound other than the sound issued by the vibration plate of the speaker unit, leading to a problem of a feeling that something is wrong.

One of the problems to be solved by the present invention is to provide a door speaker apparatus and a door panel permitting inhibition of vibration of the inner panel caused by the sound pressure of the sound issued from the back of the speaker unit and propagating through the space in the door panel.

SUMMARY OF THE INVENTION

The door speaker apparatus of the first aspect of the present invention comprises an inner panel arranged in a door panel having an outer panel and an inner trim, a speaker unit attached to the inner panel, a first acoustic space formed between the outer panel and the inner panel, and a second acoustic space formed between the inner panel and the inner trim; wherein if an opening on the back of the speaker unit through which sound issued by the speaker unit passes upon propagating to the first acoustic space is referred to as a first opening, and an opening on the back of the speaker unit through which the sound issued by the speaker unit passes upon propagating to the second acoustic space is referred to as a second opening; the effective area of the first opening and the effective area of the second opening are adjusted so that the sound pressure applied by the sound issued by the speaker unit and having propagated through the first acoustic space onto the inner panel and the sound pressure applied by the sound issued by the speaker unit and having propagated through the second acoustic space onto the inner panel cancel each other.

The door panel of the eighth aspect of the present invention has an outer panel, an inner panel and an inner trim, and comprises a first acoustic space formed between the outer panel and the inner panel, and a second acoustic space formed between the inner panel and the inner trim; wherein when a speaker unit is attached to the inner panel; and if an opening on the back of the speaker unit through which sound issued by the speaker unit passes upon propagating to the first acoustic space is referred to as a first opening, and an opening on the back of the speaker unit through which the sound issued by the speaker unit passes upon propagating to the second acoustic space is referred to as a second opening; the effective area of the first opening and the effective area of the second opening are adj usted so that the sound pressure applied by the sound issued by the speaker unit and having propagated through the first acoustic space onto the inner panel and the sound pressure applied by the sound issued by the speaker unit and having propagated through the second acoustic space onto the inner panel cancel each other.

Incidentally, "the first and the second openings" as herein referred to shall mean the openings on the back of the speaker unit through which passes the sound issued by the speaker unit upon propagating into the first and the second acoustic spaces, respectively. These openings are portions serving as the entrance which communicates the sound pressure from the vibration plate of the speaker to the first and the second acoustic spaces, respectively. In other words, they are portions considered to serve as sound pressure propagating sections to the first and the second acoustic spaces.

The term "effective area" shall mean the area of the portion to which the sound actually propagates out of the actual area of the openings, considering that sound propagation is prevented by a frame portion or an elastic member of the speaker unit.

BRIEF DESCRIPTION OF THE DRAWINGS

Fig. 1 is a sectional view illustrating a speaker apparatus SP for vehicle of an embodiment of the present invention;

Fig. 2 is a conceptual view for describing first and second openings in a vehicle speaker apparatus SP of an embodiment of the present invention and the concept of effective area of these openings;

Fig. 3 is a schematic view illustrating a mechanical vibration system of the vehicle speaker apparatus SP of an embodiment of the present invention; and

Fig. 4 illustrates an electric equivalent circuit of the vibration system of the vehicle speaker apparatus SP of an embodiment of the present invention.

DESCRIPTION OF THE PREFERRED EMBODIMENTS

Embodiments of the door speaker apparatus of the present invention will now be described with reference to the drawings by using a door speaker apparatus for vehicle as an example. While the reference numerals of the attached drawings are added to facilitate understanding of the present invention, this does not limit the present invention to the embodiments shown.

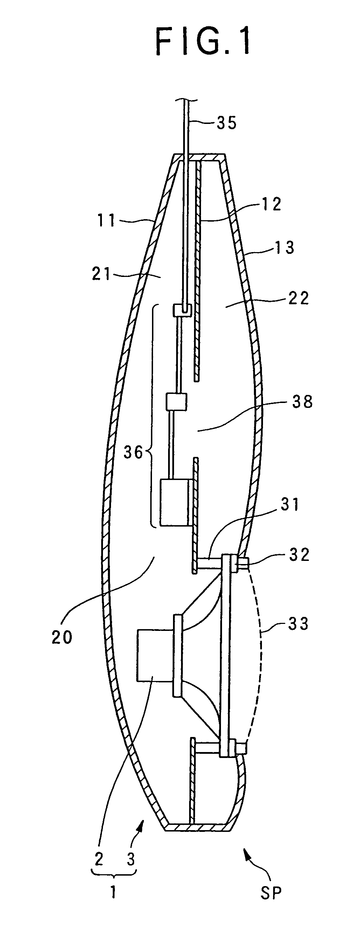

Fig. 1 is a sectional view illustrating a vehicle speaker apparatus SP of this embodiment.

A door panel 3 has an outer panel 11 outside the vehicle and an inner trim 13 on the compartment side, and a space 20 is formed in the door panel 3. An inner panel 12 is provided in this space 20, and the space 20 is divided into acoustic spaces 21 and 22 by forming a first acoustic space 21 between the outer panel 11 and the vehicle inner panel 12, and a second acoustic space 22 between the vehicle inner panel 12 and the inner trim 13. A window glass lifting mechanism 36 is attached to the vehicle inner panel 12 so as to permit housing the window glass 35 in the space 20. A speaker unit 2 is attached to the vehicle inner panel 12. The door panel 3 and the speaker unit 2 form a vehicle door 1.

The outer panel 11 is made of a steel sheet or the like, manufactured by press forming, and has a coated outer surface.

The vehicle inner panel 12 is made of a resin or a composite resin such as an FRP (Fiberglass-Reinforced Plastics) and manufactured by molding. A hole called a service hole 38 is provided for the purpose of improving operability in maintenance or reducing the weight of the door panel 3. As described above, furthermore, the speaker unit 2 is attached to the vehicle inner panel 12. To prevent vibration of the frame upon emission of sound of the speaker unit 2 from propagating to the vehicle inner panel 12, the speaker unit 2 is attached via an elastic member 31 made of a synthetic resin or the like for damping vibration.

The inner trim 13 comprises a core material or a pad, and a decorative surface having a decorative cover pasted thereto is formed on the surface on the compartment side. A punching grill 33 made of a punched steel sheet or a wire net is arranged in front of the speaker unit 2 so that the sound of the speaker unit 2 easily transmits therethrough and propagates into the compartment. This punching grill 33 serves also to protect the speaker unit 2. The inner trim 13 is in contact with the speaker unit 2 via an elastic member 32 made of a synthetic rubber or urethane for damping vibration.

Phenomena occurring when the vehicle speaker apparatus SP having the above-mentioned configuration issues sound will now be described.

When the speaker unit 2 issues sound upon receipt of audio signals, the sound passes through the punching grill 33 to propagate into the compartment, and also propagates into the space 20 in the door panel 3. In the space 20 in the door panel 3, the sound propagates to both the first acoustic space 21 formed between the outer panel 11 and the vehicle inner panel 12 and the second acoustic space 22 formed between the vehicle inner panel 12 and the inner trim 13. At this point in time, the vehicle inner panel 12 vibrates under the effect of the sound pressure applied by the sound having propagated through the first acoustic space 21 onto the vehicle inner panel 12 and the sound pressure applied by the sound having propagated through the second acoustic space 22 onto the vehicle inner panel 12, thereby producing sound.

This phenomenon will now be described with reference to the drawings.

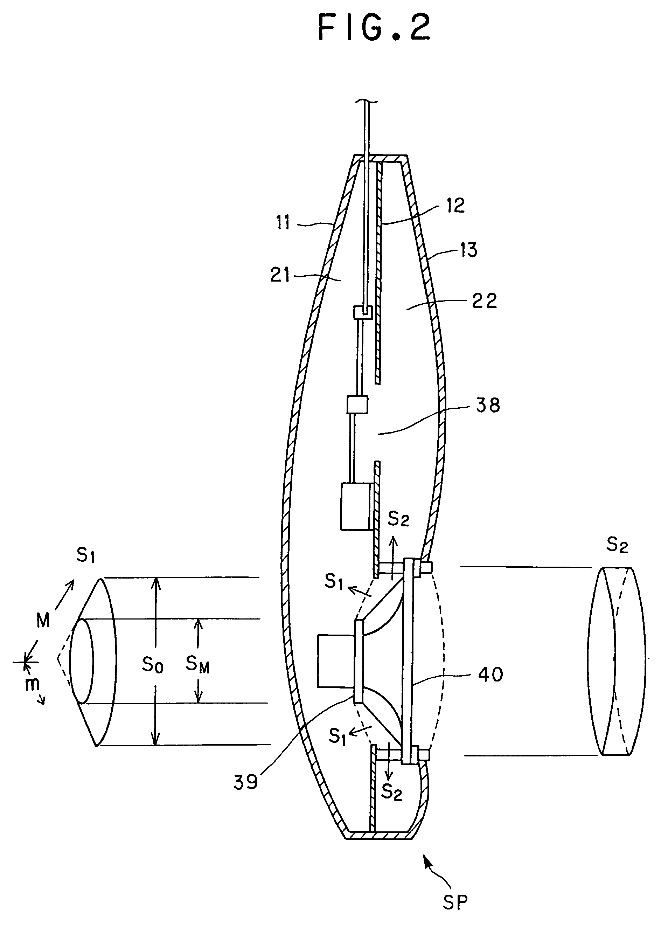

Fig. 2 is a conceptual view for describing the first and the second openings in the vehicle speaker apparatus SP of an embodiment of the present invention and the concept of effective area of these openings.

The sound emitted from the speaker unit 2 attached to the vehicle inner panel 12 propagates to the two acoustic spaces 21 and 22 through the gap between the back of the speaker unit 2 and the vehicle inner panel 12.

If the sound pressure propagating section on the back of the speaker unit serving as an entry which transmits the sound pressure from the vibration plate of the speaker to the first acoustic space is assumed to be the first opening, this substantially compares conceptually with the periphery of a conical trapezoid comprising a frame 39 on the magnetic circuit side of the speaker unit as the upper side and the hole of the speaker unit attaching section of the inner panel 12 as the lower side. Therefore, if the effective area $S1$ of the first opening is assumed to be equal to the area of the periphery of that conical trapezoid, it approximates an area represented by the following formula:

$$S1 = \pi(dM - am)$$

where, **d:** radius of the hole of the speaker unit attaching section of the inner panel 12 (1/2 $S_0$); **a:** radius of the frame 39 on the magnetic circuit side of the speaker unit (1/2 $S_M$) ; **M:** side length of an imaginary cone having the hole of the speaker unit attaching section of the inner panel 12 as the bottom side and passing through the frame 39 on the magnetic circuit side of the speaker unit; and **m**: side length of that imaginary cone having the frame 39 on the magnetic circuit side of the speaker unit as the bottom side.

Similarly, if the sound pressure propagating section on the back of the speaker unit serving as an entry which transmits the sound pressure from the vibration plate of the speaker to the second acoustic space is assumed to be the second opening, this corresponds conceptually to the circumference substantially comparing with the height of the elastic member 31 for attaching the speaker unit having substantially a cylindrical shape confined by the hole of the speaker unit attaching section of the inner panel 12 and the frame 40 outside the speaker unit. Therefore, if the effective area **S2** of the second opening is assumed to be equal to the area of the periphery of that cylindrical shape, it approximates an area represented by the following formula:

$$S2 = 2\pi\, DG$$

where, **D**: radius of the frame 40 outside the speaker unit, if the difference from the diameter of the hole of the speaker unit attaching section of the inner panel 12 is disregarded; and **G**: distance between the speaker attaching section of the inner panel 12 and the frame 40 outside the speaker unit.

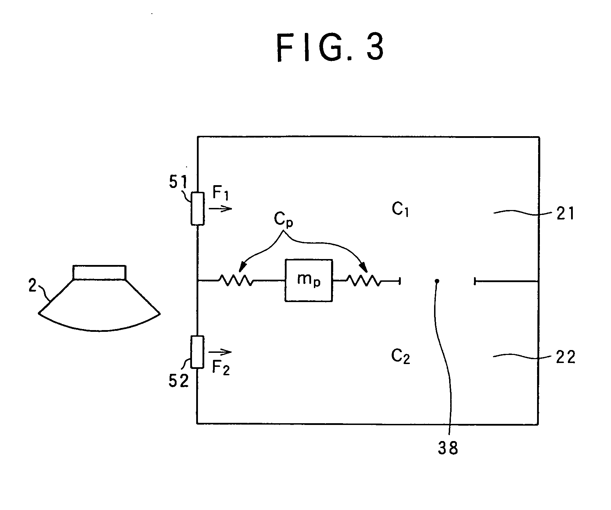

Fig. 3 is a schematic view illustrating the mechanical vibration system of the vehicle speaker apparatus SP of the above-mentioned embodiment.

In Fig. 3, it is supposed that there are provided two (imaginary) vibration plates 51 and 52 having no mass, corresponding to the two acoustic spaces 21 and 22 in the opening which is the gap between the speaker unit 2 and the vehicle inner panel 12. The equivalent mass of the vehicle inner panel 12 is represented by **mp**; the equivalent compliance, by **cp;** and the volume compliance of the two acoustic spaces 21 and 22, by **c1** and **c2,** respectively. When two forces acting on the two vibration plates 51 and 52 are assumed to be **F1** and **F2,** respectively, which take values obtained by multiplying, as described later, the sound pressures from the back of the speaker unit 2, respectively, by the effective areas of the above-mentioned openings in the acoustic spaces 21 and 22. These two forces **F1** and **F2** are applied to the acoustic spaces 21 and 22 from the speaker unit 2, respectively. The effective area has the meaning as described above.

When the vehicle inner panel 12 is assumed to serve as a baffle of the speaker cabinet, and the service hole 38, as a port, it is understood that, in this configuration, two bass-reflex type cabinets sharing the baffle (vehicle inner panel 12) and the port (service hole 38) are arranged so as to be opposite to each other. More specifically, a first bass-reflex type cabinet comprises an imaginary vibration plate 51 onto which the force **F1** acts, the first acoustic space 21 and the service hole 38, and a second bass-reflex type cabinet comprises an imaginary vibration plate 52 onto which acts the force **F2**, the second acoustic space 22 and the service hole 38.

In order to inhibit vibration of the vehicle inner panel 12, it would be ideal to provide the two forces **F1** and **F2** of equal magnitude, and the two acoustic spaces 21 and 22 of equal volumes, but this is practically difficult. The two forces **F1** and **F2** acting on the two acoustic spaces 21 and 22 via the gap of the speaker unit 2 are therefore controlled by adj usting the attaching position of the speaker unit 2 so that the sound pressures of the two sounds acting from the two acoustic spaces 21 and 22 on the vehicle inner panel 12 cancel each other.

The vibration system having the above-mentioned configuration will now be described by replacing it by an electric equivalent circuit.

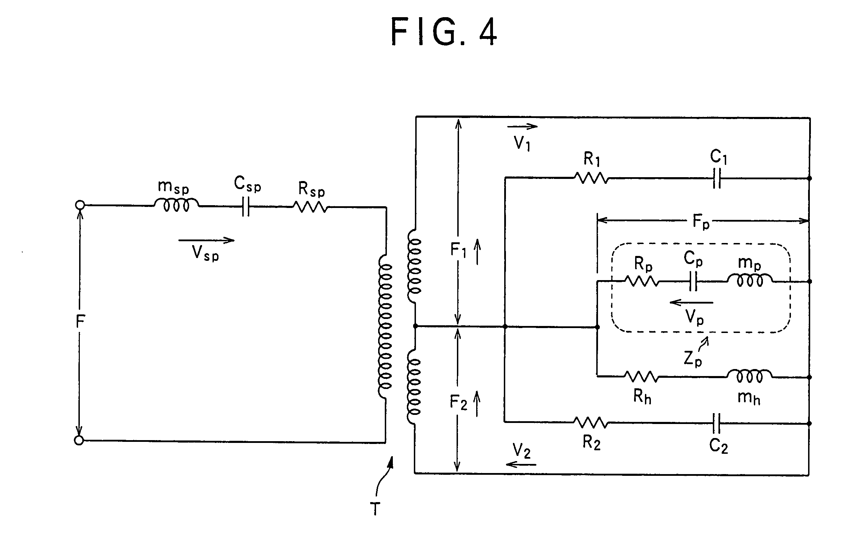

Fig. 4 illustrates an electric equivalent circuit of the vibration system of the vehicle speaker apparatus of the above-mentioned embodiment.

The circuit to the left of a transformer T is a vibromotive system equivalent circuit of the speaker unit 2, which corresponds to a primary-side circuit. The circuit to the right of the transformer T corresponds to the secondary-side circuit, representing the equivalent circuit for the vehicle door 1 in which two bass-reflex type cabinets are oppositely arranged.

In the region of the transformer T shown in Fig. 4, the vibromotive force **F** of the speaker unit 2 transmits the two forces **F1** and **F2** to the two acoustic spaces 21 and 22, respectively. Here, the ratio of magnitude of **F1** to **F2** is proportional to the ratio of effective areas of the openings of the two acoustic spaces 21 and 22 to the speaker unit 2.

In Fig. 4, **F** represents the vibromotive force issued by a voice coil of the speaker unit 2; **msp**, the equivalent mass of the vibration system of the speaker unit 2 including the equivalent mass of the air present in the space from the speaker unit 2 to the opening; **csp**, the compliance of the supporting system of the speaker unit 2; and **Rsp,** the mechanical resistance of the speaker unit 2. Equivalent mass **msp**, compliance **csp,** and mechanical resistance **Rsp** are connected in series to form a mechanical impedance of the vibration system of the speaker unit 2. **Vsp** represents the speed of the vibration place of the speaker unit 2.

**F1** represents the force from the speaker unit 2 acting on the first acoustic space 21; **V1,** the speed of the air in the first acoustic space 21; **c1,** the compliance of the volume of the first acoustic space 21; **R1,** the viscous drag upon passage of the air (sound) through the first acoustic space 21; **F2,** the force from the speaker unit 2 acting on the second acoustic space 22; $\mathbf{V_2}$, the speed of the air in the second acoustic space 22; **c2,** the volume compliance of the second acoustic space 22; $\mathbf{R_2}$, the viscous drag upon passage of the air (sound) through the second acoustic space 22; **Fp,** the force acting on the vehicle inner panel 12; **Vp,** the speed of vibration of the vehicle inner panel 12 ; **mp,** the equivalent mass of the air of the vehicle inner panel 12; **cp,** the volume compliance of the vehicle inner panel 12; **Rp,** the viscous drag upon passage of the air (sound) through the vehicle inner panel 12; **Zp,** the mechanical impedance of the vehicle inner panel 12; **mh,** the equivalent mass of the air in the service hole 38; and **Rh,** the viscous drag upon passage of the air (sound) through the service hole 38. The mechanical impedance **Zp** comprises a series circuit of the viscous drag **Rp,** the compliance **cp,** and the equivalent mass **mp**. The viscous drag **Rh** and the equivalent mass **mh** of the service hole 38 are connected in series, and in parallel with the mechanical impedance **Zp**. All the acoustic elements of the secondary-side circuit of the transformer T **(R1, C1, R2, C2, RP, CP, mP, Rh and mh)** have been converted into mechanical elements.

As described above, vibration of the vehicle inner panel 12 can be inhibited by ensuring that sound pressures of the sounds acting on the vehicle inner panel 12 from the two acoustic spaces 21 and 22 mutually set off. In other words, the force **Fp** acting on the vehicle inner panel 12 should only be 0 (**Fp** = 0), or the speed of vibration **Vp** of the inner panel should only be 0 (**Vp** = 0). Since the force **Fp** acting on the vehicle inner panel 12 can be expressed as **Fp** = **F1** + (- **F2),** the two forces **F1** and **F2** are controlled for adjusting the attaching position of the speaker unit 2 so that the force **Fp** acting on the vehicle inner panel 12 becomes 0.

More specifically, since **F1** and **F2** are entered in parallel, in order that the mechanical impedance **Zp** of the vehicle inner panel 12 satisfies **Fp** = 0, i.e., **Vp** = 0, **F1** = **F2** has only to be valid.

When the sound pressure from the back of the speaker unit 2 is represented by **Ps**, the effective area of the above-mentioned opening in the acoustic space 21, by **S1,** and the effective area of the opening in the acoustic space 22, by **S2, F1** and **F2** can be expressed by **F1** = **Ps** x **S1** and **F2** = **Ps** x **S2**. **F1** = **F2** can therefore be achieved by adjusting the position of the speaker unit 2 so as to ensure **S1** = **S2.**

Actually, however, the back of the speaker unit 2 has a complicated shape, and under the effect of arrangement of the elastic member 31 having the speaker unit 2 attached thereto and a change in volume compliance of the acoustic spaces caused upon housing the window glass 35 into the window glass lifting mechanism 36, **S1** = **S2** cannot be achieved through theoretical calculation alone. It is therefore desirable to determine a position of the speaker unit 2 equivalently giving **S1** = **S2** by measuring the vibration of the vehicle inner panel 12. A conceivable simple method for adjusting the attaching position of the speaker unit 2 is to adjust the height of the elastic member 31.

A listener (a driver or a passenger) is usually sensible to sounds having a frequency within a range from 20 Hz to 5 kHz. The position of the speaker unit 2 should therefore preferably be determined by experiment so as to permit inhibition of vibration of the vehicle inner panel 12 within this frequency range.

The present invention is not limited to the above-mentioned embodiment, but, for example, the following variations are possible.

1) The vehicle inner panel 12 has been described above as having the service hole 38 in the above-mentioned embodiment. However, even with a vehicle inner panel not having a service hole, vibration of the vehicle inner panel can be inhibited if the sound pressures of the sounds applied from the two acoustic spaces positioned on the both sides of the vehicle inner panel to the inner panel mutually set off, and thus the present invention is applicable. This is achievable by adjusting the effective area of the opening through which the sound passes during propagation to the two acoustic spaces.

2) In the above-mentioned embodiment, the position of the speaker unit 2 is determined by limiting the sound within the frequency range from 20 Hz to 5 kHz to which a listener (a driver or a passenger) is particularly sensible among voices and music sounds. For the purpose of more efficiently determining the position of the speaker unit 2, a lower limit of 300 Hz of the frequency range, or an upper limit of 1 kHz thereof may be provided.

3) While an embodiment of the door speaker apparatus of the present invention has been described with reference to the vehicle speaker apparatus SP as an example, the present invention is not limited to this and can be applicable to such door speaker having an inner panel in the door to which a speaker unit is attached and the inside door space is divided into two spaces and unnecessary sound may be given to a listener by the vibration of the inner panel. The present invention is widely applicable to door panels of moving objects such as ships.

These embodiments provide the following advantages:

1) The vehicle speaker apparatus SP of this embodiment comprises a vehicle inner panel 12 arranged in a vehicle door 1 having an outer panel 11 and an inner trim 13, a speaker unit 2 attached to the vehicle inner panel 12, a first acoustic space 21 formed between the outer panel 11 and the vehicle inner panel 12, and a second acoustic space 22 formed between the vehicle inner panel 12 and the inner trim 13. When an opening between the speaker unit 2 and the first acoustic space 21, through which the sound issued from the speaker unit 2 passes upon propagating to the first acoustic space 21 and the first acoustic space 21 is referred to as a first opening, and an opening through which the sound passes upon propagating to the second acoustic space 22 is referred to as a second opening, the effective area of the first opening and the effective area of the second opening are adjusted so that the sound pressure applied by the sound emitted from the speaker unit 2 upon propagating through the first acoustic space 21 to the vehicle inner panel 12 is set off with the sound pressure applied by the sound emitted from the speaker unit 2 upon propagating through the second acoustic space 22 to the vehicle inner panel 12. As a result, it is possible to inhibit the vibration of the vehicle inner panel 12 caused by the difference in sound pressure upon emission of the sound from the speaker unit 2, and to alleviate an unpleasant feeling caused in the listener.

2) When a service hole 38 is formed in the vehicle inner panel 12, the air in the service hole 38 discontinues vibrating by bringing the force **FP** acting on the inner panel 12 to 0, thus reducing the influence caused by this vibration of the air.

3) The door panel 3 of the embodiment comprises an outer panel 11, a vehicle inner panel 12, an inner trim 13, a first acoustic space 21 formed between the outer panel 11 and the vehicle inner panel 12, and a second acoustic space 22 formed between the vehicle inner panel 12 and the inner trim 13. When speaker unit 2 is attached to the vehicle inner panel 12, the effective area of the first opening and the effective area of the second opening are adjusted so that the sound pressure applied by the sound emitted from the speaker unit 2 upon propagating through the first acoustic space 21 to the vehicle inner panel 12 is set off with the sound pressure applied by the sound emitted from the speaker unit 2 upon propagating through the second acoustic space 22 to the vehicle inner panel 12. As a result, it is possible to inhibit the vibration of the vehicle inner panel 12 caused by the difference in sound pressure upon emission of the sound from the speaker unit 2, and to alleviate an unpleasant feeling caused in the listener.

4) Since a listener is particularly sensible to sounds having a frequency within a range from 20 Hz to 5 kHz among voices and music sounds, the position of the speaker unit 2 can efficiently be determined by limiting reduction of vibration to that of vibrations having frequencies within a range described above from among vibrations of the vehicle inner panel 12 in the vehicle speaker apparatus SP of the embodiment.

5) Upon housing the window glass 35 into the window glass lifting mechanism 36, the volume compliance of the acoustic spaces varies, and the vibration of the vehicle inner panel 12 varies accordingly. Since the position of the speaker unit 2 is determined only for sounds within a frequency range, which causes a listener to have an unpleasant feeling, it is possible to determine the position of the speaker unit 2 further efficiently.

6) The speaker unit 2 is attached to the vehicle inner panel 12 via an elastic member 31 for damping vibration made of a synthetic rubber or the like. The vibration of the frame of the speaker unit upon sound emission from the speaker unit 2 is not therefore transmitted directly to the vehicle inner panel 12. As a result, vibration transmitted via members can be inhibited in addition to vibration propagating via spaces.

7) The speaker unit 2 is in contact with the inner trim 13 via an elastic member 32 for damping vibration, made of a synthetic rubber, urethane or the like. The vibration of the frame upon sound emission of the speaker unit 2 is therefore never transmitted to the inner trim 13. As a result, unnecessary noise caused by vibration of the inner trim 13 can also be inhibited.

**Claims**

1. A door speaker apparatus (SP) comprising an inner panel (12) arranged in a door panel (3) having an outer panel (11) and an inner trim (13), a speaker unit (2) attached to said inner panel (12), a first acoustic space (21) formed between said outer panel (11) and said inner panel (12), and a second acoustic space (22) formed between said inner panel (12) and said inner trim (13), **characterized in that**

   if an opening on the back of said speaker unit (2) through which sound issued by said speaker unit (2) passes upon propagating to said first acoustic space (21) is referred to as a first opening, and an opening on the back of said speaker unit (2) through which the sound issued by said speaker unit (2) passes upon propagating to said second acoustic space (22) is referred to as a second opening,

   the effective area of said first opening and the effective area of said second opening are adjusted to that the sound pressure applied by the sound issued by said speaker unit (2) and having propagated through said first acoustic space (21) onto said inner panel (12) and the sound pressure applied by the sound issued by said speaker unit (2) and having propagated through said second acoustic space (22) onto said inner panel (12) cancel each other.

2. A door speaker apparatus (SP) according to claim 1, wherein:

the effective area of said first opening and the effective area of said second opening are adjusted by adjusting the attaching position of said speaker unit (2), thereby inhibiting vibration having a frequency within a range from 20 Hz to 5 kHz from among vibration of said inner panel (12).

3. A door speaker apparatus (SP) according to claim 1 or 2, wherein:

the effective area of said first opening is equal to the effective area of said second opening.

4. A door speaker apparatus (SP) according to any one of claims 1 to 3, wherein:

said inner panel (12) has a service hole (38);

said outer panel (11) and said inner panel (12) form a first bass-reflex type cabinet with said service hole (38) as a port and with said inner panel (12) as a baffle;

said inner trim (13) and said inner panel (12) form a second bass-reflex type cabinet with said service hole (38) as a port and with said inner panel (12) as a baffle; and

said first bass-reflex type cabinet and said second bass-reflex type cabinet are arranged so as to be opposite to each other.

5. A door speaker apparatus (SP) according to any one of claims 1 to 4, wherein:

said speaker unit (2) is attached to said inner panel (12) via an elastic member (31) for damping vibration.

6. A door speaker apparatus (SP) according to claim 5, wherein:

the effective area of said first opening and the effective area of said second opening are adjusted by means of the height of said elastic member (31).

7. A door speaker apparatus (SP) according to any one of claims 1 to 6, wherein:

said speaker unit (2) is in contact with said inner trim (13) via an elastic member (31) for damping vibration.

8. A door panel (3) having an outer panel (11), an inner panel (12) and an inner trim (13), and comprising a first acoustic space (21) formed between said outer panel (11) and said inner panel (12), and a second acoustic space (22) formed between said inner panel (12) and said inner trim (13), **characterized in that**;

when a speaker unit (2) is attached to said inner panel (12); and

if an opening on the back of said speaker unit (2) through which sound issued by said speaker unit (2) passes upon propagating to said first acoustic space (21) is referred to as a first opening, and an opening on the back of said speaker unit (2) through which the sound issued by said speaker unit (2) passes upon propagating to said second acoustic space (22) is referred to as a second opening;

the effective area of said first opening and the effective area of said second opening are adjusted so that the sound pressure applied by the sound issued by said speaker unit (2) and having propagated through said first acoustic space (21) onto said inner panel (12) and the sound pressure applied by the sound issued by said speaker unit (2) and having propagated through said second acoustic space (22) onto said inner panel (12) cancel each other.

9. A door panel (3) according to claim 8, wherein:

the effective area of said first opening and the effective area of said second opening are adjusted by adjusting the attaching position of said speaker unit (2), thereby inhibiting vibration having a frequency within a range from 20 Hz to 5 kHz from among vibration of said inner panel (12).

10. A door panel (3) according to claim 8 or 9, wherein:

the effective area of said first opening is equal to the effective area of said second opening.

11. A door panel (3) according to any one of claims 8 to 10, wherein:

said inner panel (12) has a service hole (38);

said outer panel (11) and said inner panel (12) form a first bass-reflex type cabinet with said service hole (38) as a port and with said inner panel (12) as a baffle;

said inner trim (13) and said inner panel (12) form a second bass-reflex type cabinet with said service hole (38) as a port and with said inner panel (12) as a baffle; and

said first bass-reflex type cabinet and said secondbass-reflex type cabinet are arranged so as to be opposite to each other.

**12.** A door panel (3) according to any one of claims 8 to 11, wherein:

said speaker unit (2) is attached to said inner panel (12) via an elastic member (31) for damping vibration.

**13.** A door panel (3) according to claim 12, wherein:

the effective area of said first opening and the effective area of said second opening are adjusted by means of the height of said elastic member (31).

**14.** A door panel (3) according to any one of claims 8 to 13, wherein:

said speaker unit (2) is in contact with said inner trim (13) via an elastic member (31) for damping vibration.

# FIG.1

# FIG.2

# FIG. 3

# FIG. 4

EP 1 498 317 A1

# EP 1 498 317 A1

European Patent Office

**EUROPEAN SEARCH REPORT**

Application Number

EP 04 01 6695

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 0161, no. 01 (E-1177), 12 March 1992 (1992-03-12) -& JP 03 278798 A (MINEBEA CO LTD), 10 December 1991 (1991-12-10) * abstract * | 1,8 | B60R11/02 H04R1/02 B60J5/04 |
| A | PATENT ABSTRACTS OF JAPAN vol. 0131, no. 17 (E-731), 22 March 1989 (1989-03-22) -& JP 63 287296 A (HONDA MOTOR CO LTD), 24 November 1988 (1988-11-24) * abstract * | 1,8 | |
| A | DE 198 23 363 C (BROSE FAHRZEUGTEILE) 8 July 1999 (1999-07-08) * the whole document * | 1,8 | |
| A | US 4 905 860 A (KAMATA JUNICHI ET AL) 6 March 1990 (1990-03-06) * the whole document * | 1,8 | |
| A | DE 197 17 908 A (BROSE FAHRZEUGTEILE) 29 October 1998 (1998-10-29) * the whole document * | 1,8 | TECHNICAL FIELDS SEARCHED (Int.Cl.7) B60R B60J H04R G10K |
| A | US 2 917 127 A (JOHN ELLIOTT LLEWELLYN) 15 December 1959 (1959-12-15) | | |
| A | US 4 131 179 A (POPE DARREL L) 26 December 1978 (1978-12-26) | | |

The present search report has been drawn up for all claims

| Place of search | Date of completion of the search | Examiner |
|---|---|---|
| Berlin | 1 October 2004 | Busuiocescu, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

13

**ANNEX TO THE EUROPEAN SEARCH REPORT
ON EUROPEAN PATENT APPLICATION NO.**

EP 04 01 6695

This annex lists the patent family members relating to the patent documents cited in the above-mentioned European search report.
The members are as contained in the European Patent Office EDP file on
The European Patent Office is in no way liable for these particulars which are merely given for the purpose of information.

01-10-2004

| Patent document cited in search report | | Publication date | Patent family member(s) | | Publication date |
|---|---|---|---|---|---|
| JP 03278798 | A | 10-12-1991 | NONE | | |
| JP 63287296 | A | 24-11-1988 | NONE | | |
| DE 19823363 | C | 08-07-1999 | DE | 19823363 C1 | 08-07-1999 |
| | | | WO | 9959840 A1 | 25-11-1999 |
| US 4905860 | A | 06-03-1990 | JP | 2060278 C | 10-06-1996 |
| | | | JP | 7087627 B | 20-09-1995 |
| | | | JP | 63287295 A | 24-11-1988 |
| DE 19717908 | A | 29-10-1998 | DE | 19717908 A1 | 29-10-1998 |
| US 2917127 | A | 15-12-1959 | GB | 793193 A | 09-04-1958 |
| US 4131179 | A | 26-12-1978 | NONE | | |

EPO FORM P0459

For more details about this annex : see Official Journal of the European Patent Office, No. 12/82